# EUROPEAN PATENT APPLICATION

(11) **EP 1 734 063 A1**
(43) Date of publication of application: **20.12.2006**
(21) Application number: 05105329.6
(22) Date of filing: 16.06.2005
(51) Int. Cl.: C08G 69/40, C08G 69/44

(54) **Polymers for increasing the wet slipping properties of textile material**

(71) Applicant: CLARIANT INTERNATIONAL LTD., 4132 Muttenz 1 (CH)
(72) Inventor: Tang, Qian, 4104 Oberwil (CH); Palacin, Francis, 68400 Riedisheim (FR)
(74) Representative: Herrmann, Jörg

(57) **Abstract**

The instant invention relates to new polymers which enhance the wet slipping properties of textiles and thus reduce friction during the treatment process. The polymers are produced from the reaction product of diamines with a polyoxyalkylene glycidyl ether and dicarboxylic acids. Advantageously the instant polymers are used in aqueous emulsions which may contain further additives.

## Description

The instant invention relates to polymers which enhance the wet slipping properties of textiles and thus reduce friction during the treatment process.

In the treatment of textile material in the form of textile piece goods, particularly in rope form or tubular form, essentially during pre-treatment, dyeing, optical brightening or after-treatment, in aqueous liquor under such conditions that transport folds can form in the textile substrate or abrasion can take place of substrate to adjacent substrate or apparatus parts ― in particular in jet dyeing machines and in winch becks ―, undesired phenomena are the marking of the transport folds and the formation and marking of chafe points, which then, as unlevel features, impair the fabric appearance and possibly also the physical properties of the treated goods and consequently of the finished goods. In order to counter these interfering phenomena, wet-acting lubricants (i.e. wet acting slip agents), which reduce the tendency toward the formation or stabilisation and consequently the marking of folds, in particular transport folds, and reduce the substrate/substrate and substrate/metal friction and consequently the tendency toward the formation and marking of chafe points, are employed in the corresponding process steps. So for example WO 01/21880 A1 discloses polyalkylene glycol ether-containing polyamides having a certain hydrophilicity as wet-acting lubricants in the treatment of textile material.

However in the constant refinement of the processes and machines with the aim of increasing the output and an environmentally acceptable procedure, machines and processes are being developed which are designed for higher speeds or higher outputs and/or which work with shorter liquor ratios. Greater demands are thus also made of the lubricants employed. Thus, for example, they must be resistant to particularly high shear forces while developing their action as well as possible for short liquors too. The shorter the liquor, the greater the requisite efficacy of the respective treatment agents since wet slippage of the goods and the achievement of a level, smooth goods appearance without damage to the goods is made more difficult the greater the proportion of liquor taken up by the goods.

Therefore still a need exists for lubricants which are more efficient in reducing the substrate-substrate friction of textile materials and thereby prevent the formation of crease marks and also the associated unlevel dyeing of textiles.

It has now been found that certain very special polymers are excellent wet acting lubricants.

Therefore an object of the instant invention are polymers produced from
a) the reaction product of a diamine of formula (1) or of a mixture of several diamines of formula (1)

   H₂N-X-NH₂ (1)

   with an epoxide of formula (2) 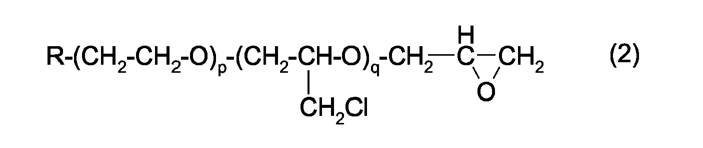 and
b) a dicarboxylic acid HOOC-Y-COOH or its anhydride or a mixture of several dicarboxylic acids or their anhydrides 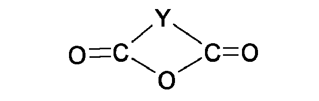 wherein
   the molar ratio of (1) to (2) is between 1:0.1 and 1:2,
   the molar ratio of a) to b) is between 1.5:1 and 0.5:1,
   - R: is C₁-C₃₀-alkyloxy, C₁-C₃₀-alkylcarboxy, aryloxy, arylcarboxy, aralkyloxy, aralkylcarboxy, alkaryloxy, alkarylcarboxy,
   - X: is a divalent linear or branched aliphatic radical or a cycloaliphatic radical or an aromatic radical,
   - Y: is a divalent saturated or unsaturated aliphatic radical, a divalent cycloaliphatic or aromatic radical,
   - p: is an average number from 2 to 100, and
   - q: is an average number from 0 to 1.

Preferred are polymers wherein
the molar ratio of (1) to (2) is between 1:0.6 and 1:2,
the molar ratio of a) to b) is between 1.3:1 and 0.7:1,
- R: is C₁-C₃₀-alkyloxy, aryloxy, aralkyloxy, alkaryloxy,
the diamine or the mixture of diamines are selected from ethylendiamine, propan-1,2-diamine, propan-1,3-diamine, hexamethylendiamine, 2-methylpentan-1,5-diamine, cyclohexan-1,2-diamine, cyclohexan-1,4-diamine, 2,2,4-trimethylhexan-1,6-diamine, isophorondiamine, m- and p-phenylendiamine, bis-(4-aminophenyl)-methan, bis-(4-aminophenyl)-sulfon, m-xylylendiamine, bis-(4-amino-cyclohexyl)-methan, 2,2-bis-(4-aminocyclohexyl)-propan, 2,2-bis-(2-amino-3-methylcyclohexyl)-propan, 4,7-dioxadecamethylendiamine, 1,3-di(amino-methyl)benzol, 1,4-di(aminomethyl)benzol, aminoterminated polylactames or diamines from aminopropylates of polyethyleneglycol or polypropylenglycol, the dicarboxylic acids or their anhydrides or mixtures thereof are selected from oxalic acid, malonic acid, succinic acid, glutaric acid, adipinic acid, corc acid, azelainic acid, dimerized linolic acid, cyclohexan-1,3-dicarboxylic acid, cyclohexan-1,4-dicarboxylic acid, isophthalic acid, terephthalic acid, oxalic acid, nonyl- or dodecylsuccinic acid, tetrahydrophthalic acid, 4-methyltetrahydrophthalic acid, hexahydrophthalic acid, 4-methylhexahydrophthalic acid, cyclohexan-1,2-dicarboxylic acid, phthalic acid or acid-terminated oligoamides,
- p: has an average number of 5 to 50, and
- q: has an average number of 0.01 to 0.6.

Especially preferred are polymers wherein
the molar ratio of (1) to (2) is between 1:0.8 and 1:2,
the molar ratio of a) to b) is between 1.2:1 and 0.8:1,
- R: is C₁-C₂₄-alkyloxy,
the diamine or the mixture of diamines are selected from ethylendiamine, propan-1,2-diamine, propan-1,3-diamine, hexamethylendiamine, 2-methylpentan-1,5-diamine, cyclohexan-1,2-diamine, cyclohexan-1,4-diamine, 2,2,4-trimethylhexan-1,6-diamine, isophorondiamine, the dicarboxylic acid or their anhydrides or mixtures thereof are selected from succinic acid, glutaric acid, adipinic acid, corc acid, azelainic acid, dimerized linolic acid, cyclohexan-1,3-dicarboxylic acid, cyclohexan-1,4-dicarboxylic acid, isophthalic acid, terephthalic acid,
- p: has an average number of 5 to 25, and
- q: has an average number of 0.01 to 0.3.

Also excellent results are obtained with polymers wherein
the molar ratio of (1) to (2) is between 1:0.8 and 1:2,
the molar ratio of a) to b) is between 1.2:1 and 0.8:1,
- R: C₁-C₂₀-alkyloxy,
the diamine or the mixture of diamines are selected from propan-1,2-diamine, propan-1,3-diamine, hexamethylendiamine, 2-methylpentan-1,5-diamine, cyclohexan-1,2-diamine,
the dicarboxylic acids or their anhydrides or mixtures thereof are selected from succinic acid, adipinic acid, cyclohexan-1,2-dicarboxylic acid, cyclohexan-1,4-dicarboxylic acid, isophthalic acid, terephthalic acid,
- p: has an average number of 5 to 25, and
- q: has an average number of 0.01 to 0.3.

The afore mentioned polymers wherein during the reaction of a) with b) additionally a diamine of formula (3)

HR'N-X-NR"H (3)

is used, wherein
- X: has the previously defined meaning,
- R': is H or C₁-C₈-alkyl, and
- R": is H or C₁-C₈-alkyl,
with the proviso that R' and R" are not H at the same time, are also very good wet acting lubricants.

The preparation of the instant polymers may be achieved by first reacting the compounds of formula (1) and (2), and then in a second step the resulting product is reacted with said dicarboxylic acids or their anhydrides in the molar ratios as mentioned before. For one skilled in the art the reaction conditions may be seen from the examples. Additionally a compound of formula (3) may be used for preparing the instant polymers. By addition of water, dispersing agents (for example non ionic fatty alcohol ethoxylates, fatty acid ethoxylates) or further additives (for example organic or inorganic acids for regulating the pH, organic solvents, biocides) to the reaction mixture after the polymerisation one can directly obtain aqueous emulsions of the instant polymers. Said emulsions may be prepared in different concentrations (containing from 1 to 50 % by weight, preferably from 2 to 30 %, more preferably from 3 to 20 % by weight of the instant polymer) and may directly be applied for treatment of textiles.

A further object of the instant invention is the use of the above mentioned polymers as wet acting lubricants in the treatment of textiles. This treatment can also be a dyeing or optical brightening process. The instant polymers may be used in aqueous emulsions containing the polymer as active substance in the concentrations mentioned above. From 0 to 20 % by weight, preferably from 0 to 10 % by weight of further additives like dispersing agents, preserving agents or organic solvents may be contained in said emulsions.

The wet-acting lubricants according to the invention are advantageously employed in such concentrations that fold marking and chafe point formation are effectively prevented in the respective process. They are distinguished by their effectiveness and yield and can exhibit a very high action in very low concentrations. They are advantageously employed in concentrations which correspond to from 0.01 to 2 g of the instant polymer per litre of liquor (liquid for treatment, dyeing or optical brightening of the texile material), preferably from 0.02 to 1 g per litre of liquor, particularly preferably from 0.04 to 1 g per litre of liquor.

A further object of the instant invention is a process for increasing the wet slipping properties of textile materials during dyeing or pretreatment comprising the steps of
- inserting the textile material into a machine for dyeing or pretreatment,
- adding water and the described polymer or an aqueous emulsion thereof,
- adding the dyes or the pretreatment chemicals,
- adding optionally further additives,
- adjusting the pH to the desired value,
- heating the mixture to the desired temperature and keeping it there for the desired time,
- cooling the mixture down and rinsing the textile material.

The following non limiting examples shall explain the instant invention in more detail.

### Examples

### Example A

432.60 g of tridecanol poly-9.5-glycol ether are dried at 80°C under 40-50 mbar for 1 hour. 4.60 g of tin tetrachloride are then added under nitrogen. 64.80 g of epichlorohydrin are added during ca. 1 hour by keeping the temperature at 83-85°C. The reaction mixture is further heated for 1 hour at 80°C. The trace of unreacted epichlorohydrin is eliminated at 80°C under 40-50 mbar during ca. 1 hour. After cooling at 30°C, 43.58 g of potassium hydroxide (90%) are added. The resulting water is distilled at 50°C under 40 mbar for 1 hour. The resulting potassium chloride is eliminated by filtration, to give the corresponding epoxide with a molecular weight of 800 g/mol and a non hydrolysable chloride content of ca. 0.19 mol/kg.

### Example B

911.25 g of methoxy polyethyleneglycol 750 are dried at 80°C under 40-50 mbar for 1 hour. 9.00 g of tin tetrachloride are then added under nitrogen. 112.38 g of epichlorohydrin are added during ca. 1 hour by keeping the temperature at 83-85°C. The reaction mixture is further heated for 1 hour at 80°C. The trace of unreacted epichlorohydrin is eliminated at 80°C under 40-50 mbar during ca. 1 hour. After cooling at 30°C, 74.00 g of potassium hydroxide are added. The resulting water is distilled at 50°C under 40 mbar for 1 hour. The resulting potassium chloride is eliminated by filtration, to give the corresponding epoxide with a molecular weight of 932 g/mol and a non hydrolysable chloride content of ca. 0.11 mol/kg.

### Example C

440.00 g of methoxy polyethyleneglycol 550 are dried at 80°C under 40-50 mbar for 1 hour. 5.93 g of tin tetrachloride are then added under nitrogen. 74.02 g of epichlorohydrin are added during ca. 1 hour by keeping the temperature at 83-85°C. The reaction mixture is further heated for 1 hour at 80°C. The trace of unreacted epichlorohydrin is eliminated at 80°C under 40-50 mbar during ca. 4 hour. After cooling at 30°C, 49.77 g of potassium hydroxide are added. The resulting water is distilled at 50°C under 40 mbar for 3 hours. The resulting potassium chloride is eliminated by filtration, to give the corresponding epoxide with a molecular weight of 697 g/mol and a non hydrolysable chloride content of ca. 0.05 mol/kg.

### Example D

425.25 g of methoxy polyethyleneglycol 350 are dried at 80°C under 40-50 mbar for 1 hour. 3.50 g of tin tetrachloride are then added under nitrogen. 112.38 g of epichlorohydrin are added during ca. 1 hour by keeping the temperature at 83-85°C. The reaction mixture is further heated for 2 hours at 80°C. The trace of unreacted epichlorohydrin is eliminated at 80°C under 40-50 mbar during ca. 2 hour. After cooling at 30°C, 69.00 g of potassium hydroxide are added. The resulting water is distilled at 50°C under 40 mbar for 3 hours. The resulting potassium chloride is eliminated by filtration, to give the corresponding epoxide with a molecular weight of 513 g/mol and a non hydrolysable chloride content of ca. 0.14 mol/kg.

### Example 1

362.63 g of the epoxide prepared according to Example A and 26.34 g of hexamethylenediamine are heated together at 85°C under nitrogen for ca. 3 hours until >98% of the epoxide are reacted. 33.12 g of adipic acid are added. The mixture is then heated at 175°C and the resulting water is eliminated. When the acid content reaches 0.23 mol/kg, the mixture is cooled down to 70°C. 42.2 g of Emulsogen LCN 407 (Clariant) and 1535.4 g of deionised water are added. The temperature dropped down to 40°C. 71.8 g of 40% aqueous solution of sodium hydrogensulfite are added. The pH is adjusted to 4.2 with acetic acid. The mixture is further diluted by adding 6434.9 g of water.

### Example 2

51.95 g of the epoxide prepared according to Example A and 3.49 g of hexamethylenediamine are heated together at 135°C under nitrogen for ca. 4 hours until >98% of the epoxide are reacted. 4.47 g of cyclohexyl-1,4-dicarboxylic acid are added. The mixture is then heated at 185°C and the resulting water is eliminated. When the acid content reaches 0.02 mol/kg, 30 g of glycerol are added and the mixture is cooled down to 80°C. 100.00 g of deionised water are added and the mixture is stirred for ca. 2 hours until it becomes homogeneous. 109.64 g of deionised water are added and the temperature dropped down to 40°C. The pH is adjusted to 7.00 with acetic acid. The mixture is further diluted by adding 898.65 g of water.

### Example 3

100.37 g of the epoxide prepared according to Example B and 15.46 g of hexamethylenediamine are heated together at 85°C under nitrogen for ca. 3 hours until >98% of the epoxide are reacted. 19.45 g of adipic acid are added. The mixture is then heated at 165°C and the resulting water is eliminated. When the acid content reaches 0.36 mol/kg, the mixture is cooled down to 80°C. 13.53 g of Emulsogen LCN 407 (Clariant) and 525.29 g of deionised water are added. The temperature dropped down to 40°C. 2.30 g of 40% aqueous solution of sodium hydrogensulfite are added. The pH is adjusted to 4.60 with acetic acid. The mixture is further diluted by adding 2029.20 g of water.

### Example 4

119.76 g of the epoxide prepared according to Example A and 8.72 g of 2-methyl-1,5-pentanediamine are heated together at 85°C under nitrogen for ca. 8 hours until >97% of the epoxide are reacted. 10.95 g of adipic acid are added. The mixture is then heated at 165°C and the resulting water is eliminated. When the acid content reaches 0.24 mol/kg, the mixture is cooled down to 70°C. 13.94 g of Emulsogen LCN 407 (Clariant) and 541.97 g of deionised water are added. The temperature dropped down to 40°C. 1.81 g of 40% aqueous solution of sodium hydrogensulfite are added. The pH is adjusted to 4.57 with acetic acid. The mixture is further diluted by adding 2091.45 g of water.

### Example 5

123.02 g of the epoxide prepared according to Example A and 8.72 g of hexamethylenediamine are heated together at 85°C under nitrogen for ca. 4 hours until >98% of the epoxide are reacted. 7.50 g of succinic anhydride are added. The mixture is heated at 120°C for 2 hours then heated at 175°C and the resulting water is eliminated. When the acid content reaches 0.10 mol/kg, the mixture is cooled down to 70°C. 13.90 g of Emulsogen LCN 407 (Clariant) and 539.63 g of deionised water are added. The temperature dropped down to 40°C. 2.43 g of 40% aqueous solution of sodium hydrogensulfite are added. The pH is adjusted to 4.54 with acetic acid. The mixture is further diluted by adding 2084.85 g of water.

### Example 6

83.66 g of the epoxide prepared according to Example C and 11.62 g of hexamethylenediamine are heated together at 85°C under nitrogen for ca. 2 hours until >98% of the epoxide are reacted. 14.61 g of adipic acid are added. The mixture is then heated at 160°C and the resulting water is eliminated. When the acid content reaches 0.39 mol/kg, the mixture is cooled down to 70°C. 10.95 g of Emulsogen LCN 407 (Clariant) and 426.89 g of deionised water are added. The temperature dropped down to 40°C. 1.92 g of 40% aqueous solution of sodium hydrogensulfite are added. The pH is adjusted to 4.54 with acetic acid. The mixture is further diluted by adding 1648.35 g of water.

### Example 7

92.37 g of the epoxide prepared according to Example D and 17.43 g of hexamethylenediamine are heated together at 85°C under nitrogen for ca. 3 hours until >98% of the epoxide are reacted. 21.92 g of adipic acid are added. The mixture is then heated at 165°C and the resulting water is eliminated. When the acid content reaches 0.51 mol/kg, the mixture is cooled down to 70°C. 13.79 g of Emulsogen LCN 407 (Clariant) and 510.79 g of deionised water are added. The temperature dropped down to 40°C. 2.30 g of 40% aqueous solution of sodium hydrogensulfite are added. The pH is adjusted to 4.40 with acetic acid. The mixture is further diluted by adding 1975.80 g of water.

### Example 8

85.40 g of the epoxide prepared according to Example A and 5.81 g of hexamethylenediamine are heated together at 85°C under nitrogen for ca. 4 hours until >98% of the epoxide are reacted. 8.31 g of isophthalic acid are added. The mixture is then heated at 165°C and the resulting water is eliminated. When the acid content reaches 0.24 mol/kg, the mixture is cooled down to 70°C. 10.50 g of Emulsogen LCN 407 (Clariant) and 385.93 g of deionised water are added. The temperature dropped down to 40°C. 1.65 g of 40% aqueous solution of sodium hydrogensulfite are added. The pH is adjusted to 4.50 with acetic acid. The mixture is further diluted by adding 1492.80 g of water.

### Example 9

85.40 g of the epoxide prepared according to Example A and 3.70 g of propylenediamine are heated together at 85°C under nitrogen for ca. 4 hours until >98% of the epoxide are reacted. 7.31 g of adipic acid are added. The mixture is then heated at 165°C and the resulting water is eliminated. When the acid content reaches 0.14 mol/kg, the mixture is cooled down to 70°C. 10.23 g of Emulsogen LCN 407 (Clariant) and 373.80 g of deionised water are added. The temperature dropped down to 40°C. 1.61 g of 40% aqueous solution of sodium hydrogensulfite are added. The pH is adjusted to 4.50 with acetic acid. The mixture is further diluted by adding 1446.15 g of water.

### Example 10

85.40 g of the epoxide prepared according to Example A and 5.77 g of 1,2-diamineo cyclohexane are heated together at 85°C under nitrogen for ca. 10 hours until >98% of the epoxide are reacted. 7.31 g of adipic acid are added. The mixture is then heated at 165°C and the resulting water is eliminated. When the acid content reaches 0.15 mol/kg, the mixture is cooled down to 70°C. 10.44 g of Emulsogen LCN 407 (Clariant) and 381.84 g of deionised water are added. The temperature dropped down to 40°C. 1.64 g of 40% aqueous solution of sodium hydrogensulfite are added. The pH is adjusted to 4.50 with acetic acid. The mixture is further diluted by adding 1477.2 g of water.

### Application example A (Dyeing of a polyamide knitted fabric)

A piece of polyamide knitted fabric is dyed as follows in a laboratory jet machine: 90 parts of polyamide fabric are introduced into the jet machine, which contains 900 parts of deionised water and 1 part of the product obtained from Example 1. 0.23 parts of CI Acid Yellow 256, 0.20 part of CI Acid Red 57, 0.41 part of CI Acid Blue 72, 1 part of a cationic levelling agent based on alkylamine ethoxylate, 1 part of an acid donor (Sandacid VS liquid) are added to the bath and the pH of the bath is set at 8 with soda ash. The bath is then heated from room temperature to 98°C at a rate of 1°C/min. and the dyeing is continued at 98°C for a further 30 minutes. After cooling down to 50°C the bath is drained off and the dyed fabric is rinsed twice with fresh water at 40°C. After draining the bath the fabric is unloaded and dried in free air at room temperature.
An anthracite grey, uniformly dyed fabric with a very attractive appearance is obtained.

By using each of the products obtained from Examples 2-10 in the same manner as the product obtained from Example 1, uniformly dyed fabrics with a very attractive appearance are also obtained.

### Application example B (Dyeing of polyamide microfibre woven fabric)

A piece of polyamide microfibre fabric is dyed as follows in a laboratory jet machine: 90 parts of polyamide fabric are introduced into the jet machine, which contains 900 parts of deionised water and 1 part the product obtained from Example 1. 0.41 part of CI Acid Orange 67, 0.47 part of CI Acid Red 336, 0.47 part of CI Acid Blue 350, 1 part of a cationic levelling agent based on alkylamine ethoxylate, 1 part of an acid donor (Sandacid VS liquid) are added to the bath and the pH of the bath is set at 8 with soda ash. The bath is then heated from room temperature to 98°C at a rate of 1°C/min. and the dyeing is continued at 98°C for a further 30 minutes. After cooling down to 50°C the bath is drained off and the dyed fabric is rinsed twice with fresh water at 40°C. After draining the bath the fabric is unloaded and dried in free air at room temperature.
A brown, uniformly dyed fabric with a very attractive appearance is obtained.

By using each of the products obtained from Examples 2-10 in the same manner as the product obtained from Example 1, very level dyed fabrics with a very attractive appearance are also obtained.

### Application example C (Dyeing of a cotton knitted fabric)

A piece of cotton knitted fabric is dyed as follows in a laboratory jet machine: 100 parts of cotton fabric are introduced into the jet machine, which contains 800 parts of deionised water at 40°C, 60 parts of sodium sulphate and 1 part of part the product obtained from Example 1. A solution of 3.3 parts of CI Reactive Red 147 in 100 parts soft water is added to the bath and the machine is run at 40°C for 30 minutes. Then 5 portions of 20 parts of a 10% solution of soda ash are added at intervals of 5 minutes. The temperature of the bath is then raised to 60°C and the dyeing is continued at that temperature for a further 30 minutes. After customary rinsing and soaping processes a very level red dyeing with a very attractive appearance is obtained.

By using each of the products obtained from Examples 2-10 in the same manner as the product obtained from Example 1, uniformly dyed fabrics with a very attractive appearance are also obtained.

## Claims

1. Polymer produced from
a) the reaction product of a diamine of formula (1) or of a mixture of several diamines of formula (1)
H₂N-X-NH₂ (1)
with an epoxide of formula (2) 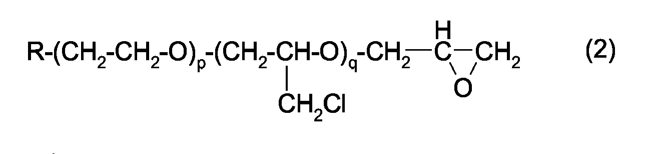 and
b) a dicarboxylic acid HOOC-Y-COOH or its anhydride or a mixture of several dicarboxylic acids or their anhydrides 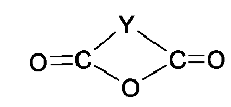 wherein
the molar ratio of (1) to (2) is between 1:0.1 and 1:2,
the molar ratio of a) to b) is between 1.5:1 and 0.5:1,
R is C₁-C₃₀-alkyloxy, C₁-C₃₀-alkylcarboxy, aryloxy, arylcarboxy, aralkyloxy, aralkylcarboxy, alkaryloxy, alkarylcarboxy,
X is a divalent linear or branched aliphatic radical or a cycloaliphatic radical or an aromatic radical,
Y is a divalent saturated or unsaturated aliphatic radical, a divalent cycloaliphatic or aromatic radical,
p is an average number from 2 to 100, and
q is an average number from 0 to 1.

2. Polymer according to claim 1 wherein
the molar ratio of (1) to (2) is between 1:0.6 and 1:2,
the molar ratio of a) to b) is between 1.3:1 and 0.7:1,
R is C₁-C₃₀-alkyloxy, aryloxy, aralkyloxy, alkaryloxy,
the diamine or the mixture of diamines are selected from ethylendiamine, propan-1,2-diamine, propan-1,3-diamine, hexamethylendiamine, 2-methylpentan-1,5-diamine, cyclohexan-1,2-diamine, cyclohexan-1,4-diamine, 2,2,4-trimethylhexan-1,6-diamine, isophorondiamine, m- and p-phenylendiamine, bis-(4-aminophenyl)-methan, bis-(4-aminophenyl)-sulfon, m-xylylendiamine, bis-(4-amino-cyclohexyl)-methan, 2,2-bis-(4-aminocyclohexyl)-propan, 2,2-bis-(2-amino-3-methylcyclohexyl)-propan, 4,7-dioxadecamethylendiamine, 1,3-di(amino-methyl)benzol, 1,4-di(aminomethyl)benzol, aminoterminated polylactames or diamines from aminopropylates of polyethyleneglycol or polypropylenglycol,
the dicarboxylic acids or their anhydrides or mixtures thereof are selected from oxalic acid, malonic acid, succinic acid, glutaric acid, adipinic acid, corc acid, azelainic acid, dimerized linolic acid, cyclohexan-1,3-dicarboxylic acid, cyclohexan-1,4-dicarboxylic acid, isophthalic acid, terephthalic acid, oxalic acid, nonyl- or dodecylsuccinic acid, tetrahydrophthalic acid, 4-methyltetrahydrophthalic acid, hexahydrophthalic acid, 4-methylhexahydrophthalic acid, cyclohexan-1,2-dicarboxylic acid, phthalic acid or acid-terminated oligoamides,
p has an average number of 5 to 50, and
q has an average number of 0.01 to 0.6.

3. Polymer according to claim 2 wherein
the molar ratio of (1) to (2) is between 1:0.8 and 1:2,
the molar ratio of a) to b) is between 1.2:1 and 0.8:1,
R is C₁-C₂₄-alkyloxy,
the diamine or the mixture of diamines are selected from ethylendiamine, propan-1,2-diamine, propan-1,3-diamine, hexamethylendiamine, 2-methylpentan-1,5-diamine, cyclohexan-1,2-diamine, cyclohexan-1,4-diamine, 2,2,4-trimethylhexan-1,6-diamine, isophorondiamine,
the dicarboxylic acid or their anhydrides or mixtures thereof are selected from succinic acid, glutaric acid, adipinic acid, corc acid, azelainic acid, dimerized linolic acid, cyclohexan-1,3-dicarboxylic acid, cyclohexan-1,4-dicarboxylic acid, isophthalic acid, terephthalic acid,
p has an average number of 5 to 25, and
q has an average number of 0.01 to 0.3.

4. Polymer according to claim 3 wherein
the molar ratio of (1) to (2) is between 1:0.8 and 1:2,
the molar ratio of a) to b) is between 1.2:1 and 0.8:1,
R C₁-C₂₀-alkyloxy,
the diamine or the mixture of diamines are selected from propan-1,2-diamine, propan-1,3-diamine, hexamethylendiamine, 2-methylpentan-1,5-diamine, cyclohexan-1,2-diamine,
the dicarboxylic acids or their anhydrides or mixtures thereof are selected from succinic acid, adipinic acid, cyclohexan-1,2-dicarboxylic acid, cyclohexan-1,4-dicarboxylic acid, isophthalic acid, terephthalic acid,
p has an average number of 5 to 25, and
q has an average number of 0.01 to 0.3.

5. Polymer according to one of the preceding claims wherein during the reaction of
a) with b) additionally a diamine of formula (3)
HR'N-X-NR"H (3)
is used, wherein
X has the previously defined meaning,
R' is H or C₁-C₈-alkyl, and
R" is H or C₁-C₈-alkyl,
with the proviso that R' and R" are not H at the same time.

6. Aqueous emulsion containing from 1 to 50 % by weight of a polymer according to any of the preceding claims and from 0 to 20 % by weight of a dispersing agent and from 0 to 20 % by weight of further additives which are selected from inorganic or organic acids for regulating the pH or organic solvents or biocides.

7. Aqueous emulsion according to claim 6 containing from 2 to 30 % by weight of a polymer according to any of claims 1 to 5 and from 0 to 10 % by weight of a dispersing agent and from 0 to 10 % by weight of further additives.

8. Process for preparing polymers according to any of claims 1 to 4 wherein a diamine of formula (1) or a mixture of serveral diamines of formula (1) is reacted with an epoxide of formula (2) and the resulting reaction product is then reacted with a dicarboxylic acid or its anhydride or with a mixture of severals dicarboxylic acids or their anhydrides.

9. Process for preparing polymers according to claim 5 wherein during the reaction of a) with b) additionally a diamine of formula (3) is used.

10. Process according to claim 8 or 9 wherein by the addition of water, dispersing agents or further additives as defined in claim 6 an aqueous emulsion of said polymers is obtained.

11. Use of a polymer according to any of claims 1 to 5 or of an aqueous emulsion according to claims 6 or 7 as wet acting lubricant in the treatment of textiles.

12. Use according to claim 11 wherein the treatment is a dyeing or optical brightening process.

13. Process for increasing the wet slipping properties of textile materials during dyeing or pretreatment comprising the steps of
- inserting the textile material into a machine for dyeing or pretreatment,
- adding water and a polymer according to any of claims 1 to 5 or an aqueous emulsion according to claims 6 or 7,
- adding the dyes or the pretreatment chemicals,
- adding optionally further additives,
- adjusting the pH to the desired value,
- heating the mixture to the desired temperature and keeping it there for the desired time,
- cooling the mixture down and rinsing the textile material.
